# EUROPÄISCHE PATENTSCHRIFT

(11) **EP 2 855 194 B1**
(45) Veröffentlichungstag und Bekanntmachung des Hinweises auf die Patenterteilung: **11.07.2018**
(21) Anmeldenummer: 13722406.9
(22) Anmeldetag: 10.05.2013
(51) Int. Cl.: B60N 2/08

(54) **BETÄTIGUNGSEINHEIT FÜR EINEN FAHRZEUGSITZ**
ACTUATOR FOR A VEHICLE SEAT
UNITÉ D'ACTIONNEMENT POUR UN SIÈGE DE VÉHICULE

(30) Priorität: 30.05.2012 DE 102012104664; 25.10.2012 DE 102012110208
(43) Veröffentlichungstag der Anmeldung: 08.04.2015
(73) Patentinhaber: Adient Luxembourg Holding S.à r.l., 1855 Luxembourg (LU)
(72) Erfinder: FLICK, Joachim, 42499 Hückeswagen (DE)
(74) Vertreter: Finger, Catrin
(86) Internationale Anmeldenummer: PCT/EP2013/059747
(87) Internationale Veröffentlichungsnummer: WO 2013/178449

(56) Entgegenhaltungen:
- WO-A1-2011/085768
- DE-A1-102008 017 007

## Beschreibung

Die Erfindung betrifft eine Betätigungseinheit für einen Fahrzeugsitz, insbesondere zur Betätigung einer Verriegelungsvorrichtung einer Sitzschiene eines Kraftfahrzeugsitzes, mit
- einem über einen Bolzen an einem Grundelement angelenkten Betätigungselement und
- einem an dem Bolzen angeordneten, das Betätigungselement vorspannenden Federelement.

Fahrzeugsitze werden in einem Fahrzeug üblicherweise auf einem Sitzschienenpaar aus einer oberen und einer unteren Sitzschiene montiert, wobei die obere Sitzschiene, die den Fahrzeugsitz trägt, relativ zu der am Fahrzeug fest angebrachten unteren Sitzschiene verschoben werden kann, um die Position des Fahrzeugsitzes in dem Fahrzeug zu verstellen.

Um den Fahrzeugsitz in einer von einem Benutzer eingestellten Position zu fixieren, ist eine Verriegelungsvorrichtung als Teil einer Vorrichtung zur Verstellung erforderlich. Dabei muss diese Verriegelungsvorrichtung automatisch oder manuell lösbar ausgebildet sein, um im Bedarfsfall die Verstellbarkeit des Fahrzeugsitzes entlang des Schienenpaares zu ermöglichen und während des Betriebs einen festen Halt des Fahrzeugsitzes an der Fahrzeugstruktur gewährleisten zu können.

Hierfür eingesetzte Betätigungseinheiten für einen Fahrzeugsitz, welche insbesondere an einem Sitzschienenpaar eines Kraftfahrzeugsitzes verwendet werden, sind in vielfältiger Ausgestaltung aus dem Stand der Technik bekannt. Bei einem solchen Mechanismus wird dazu typischerweise eine starres Betätigungselement durch eine Öffnung in der den Fahrzeugsitz tragenden Sitzschiene hindurchgeschoben und über eine Achse schwenkbar an der Sitzschiene angelenkt, wobei ein Ende des Betätigungselements eine Verriegelungsvorrichtung betätigt, wohingegen das andere Ende des Betätigungselements manuell von dem Benutzer oder automatisch gesteuert betätigt wird. Insbesondere manuell zu betätigenden Betätigungselementen werden dabei häufig durch ein Federelement in einer vorbestimmten, verschwenkten Position gehalten.

Dabei wird die das Betätigungselement an der Sitzschiene lagernde Achse oder Welle beispielsweise mittels eines geeigneten Befestigungsmittels, etwa einer Mutter oder eines Splints gegen ein axiales Herausrutschen gesichert, was jedoch eine komplizierte, zeitaufwändige und damit kostenintensive Montage erfordert.

Alternativ können zur Lagesicherung der Achse oder Welle deren Enden umgeformt, beispielsweise verquetscht werden, was neben einem komplizierten Montageprozess ferner zur Folge hat, dass es zu einer Beschädigung der Achse oder zumindest einer Beeinträchtigung einer darauf angebrachten Lack- oder Schutzschicht kommt, wodurch die Funktionalität und Lebensdauer der Betätigungseinheit eingeschränkt wird.

Darüber hinaus sind auch Vorrichtungen des Standes der Technik bekannt, bei denen das Betätigungselement nicht von einer Achse, sondern von einer komplex geformten Schenkelfeder, häufig in Kombination mit einem weiteren, mehrteiligen Mechanismus gehalten wird, wodurch der Einbau der Vorrichtung besonders kompliziert und kostenaufwändig ist und daher nur manuell von einem Arbeiter durchgeführt werden kann.

In der WO 2011/085768 A1 werden eine Verriegelungsvorrichtung, ein Schienenverstellsystem, ein Fahrzeugsitz und ein Verfahren zur Herstellung eines Schienenverstellsystems beschrieben. Die Verriegelungsvorrichtung zur Längsverstellung eines Fahrzeugsitzes weist ein Sperrmittel auf, welches zwischen einer Entriegelungsstellung, in welcher eine Oberschiene gegenüber einer Unterschiene in Längsrichtung verschiebbar ist, und einer Verriegelungsstellung, in welcher die Oberschiene gegenüber der Unterschiene in Längsrichtung verriegelt ist, verschwenkbar ist. Wenigstens ein Lagerelement des Sperrmittels ist gegenüber wenigstens einer Lagerlasche schwenkbar gelagert. Das Sperrmittel ist mittels wenigstens einer Feder in die Verriegelungsstellung vorgespannt. Die Feder ist ferner zum Halten des Lagerelements in der Lagerlasche vorgesehen.

In der DE 10 2008 017 007 A1 wird eine Mehrstiftverriegelungseinrichtung einer Verstellvorrichtung eines Kraftfahrzeugsitzes beschrieben. Die Sperrklinken verriegelungseinrichtung der Verstellvorrichtung des Kraftfahrzeugsitzes dient der Verstellung zweier Teile des Kraftfahrzeugsitzes in einer Verstellrichtung. Sie hat mindestens drei unabhängig voneinander in eine Verriegelungsposition elastisch durch jeweils eine Sperrfeder vorbelastete Sperrteile. Diese weisen jeweils einen Sperrzahn, ein Betätigungsende und eine Lagerbohrung auf. Die Längsverstellvorrichtung hat weiterhin eine Lagerwelle, die sich in Verstellrichtung und durch die Lagerbohrung der Sperrteile erstreckt.

Der Erfindung liegt die Aufgabe zugrunde, eine einfache und kostengünstige Betätigungseinheit für einen Fahrzeugsitz bereit zu stellen, die aus nur wenigen Bauelementen besteht und aufgrund ihres einfachen Aufbaus automatisch montiert werden kann.

Die Aufgabe wird erfindungsgemäß durch eine Vorrichtung nach Anspruch 1 gelöst. Vorteilhafte Weiterbildungen der Erfindung sind in den abhängigen Ansprüchen angegeben.

Die erfindungsgemäße Betätigungseinheit für einen Fahrzeugsitz umfasst ein Betätigungselement, das über einen Bolzen an einem Grundelement schwenkbar angebracht ist.

An dem Bolzen ist ein Federelement angeordnet, das an einem Ende in Kontakt mit dem Grundelement und an einem anderen Ende in Kontakt mit dem Betätigungselement steht und das Betätigungselement in der Regel in Richtung auf eine Verriegelungsstellung der Verriegelungsvorrichtung vorspannt, wobei das Federelement zusätzlich ein Herausrutschen des Bolzens aus seiner montierten Position gegenüber dem Grundelement und an dem Betätigungselement in besonders einfacher Weise verhindert.

Die erfindungsgemäße Betätigungseinheit für einen Fahrzeugsitz umfasst somit nur eine geringe Anzahl an Bauteilen, wodurch Produktion und Montage in einfacher Weise und mit geringem Kostenaufwand ausgeführt werden können. Insbesondere die einfache, aber äußerst effiziente Befestigung des Bolzens an dem Grundelement und an dem Betätigungselement mittels des Federelements ermöglicht eine vollautomatische Montage in wenigen Arbeitsschritten, was im Fall eines komplexeren Mechanismus nur eingeschränkt und unter großem Aufwand möglich wäre.

Bei dem Grundelement kann es sich grundsätzlich um ein beliebiges Bauteil handeln, insbesondere aber um eine Sitzschiene eines Sitzschienenpaares. Das Grundelement kann beliebig geformt und aus einem beliebigen Material, etwa Metall, Kunststoff, einem Werkstoffverbund oder einem Verbundmaterial gebildet sein.

Das Grundelement weist dabei wenigstens eine Haltevorrichtung, bevorzugt wenigstens zwei Haltevorrichtungen für den Bolzen auf. Die Haltevorrichtung kann dabei grundsätzlich aus einem beliebigen Material gebildet sein und aus einer beliebigen Anzahl an Bauelementen bestehen.

Bevorzugt weist das Grundelement eine Ausnehmung auf, durch die das Betätigungselement hindurchragend angeordnet ist, wobei die Ausnehmung ausreichend dimensioniert ist, dass das Betätigungselement innerhalb der Ausnehmung seine Funktion ausführen kann. Das Betätigungselement weist dabei auf der einen Seite des Grundelements einen Betätigungsbereich auf. Die Wirkung der Betätigung dieses Bereichs wird dann direkt auf einen Wirkungsbereich auf der gegenüberliegenden Seite des Grundelements übertragen.

Das Betätigungselement kann aus einem beliebigen, stabilen Material gebildet sein, etwa Metall, Kunststoff oder einem Verbundmaterial. Dabei kann das Betätigungselement eine beliebige Form aufweisen und einstückig oder als Baugruppe aus mehreren Bauelementen ausgebildet sein. Das Betätigungselement kann einzig zur Betätigung eines Verriegelungsmechanismus oder einer anderen einzelnen Vorrichtung vorgesehen sein oder wenigstens eine weitere Funktion erfüllen. Bevorzugt ist das Betätigungselement dabei einstückig aus Metall, besonders bevorzugt als im Wesentlichen gestanztes Metallprofil gebildet.

Der Wirkungsbereich des Betätigungselements ist bevorzugt in einem Bereich des Betätigungselements angeordnet, der sich in Bezug zum Betätigungsbereich auf der gegenüberliegenden, durch die Ausnehmung des Grundelements geführten Seite des Betätigungselements befindet. Besonders bevorzugt befindet sich der Wirkungsbereich des Betätigungselements auf einer dem Bolzen gegenüberliegenden Seite des Grundelements.

Zur Anbringung des Bolzens an dem Betätigungselement ist wenigstens ein Halteelement zur form-, kraft- und/oder stoffschlüssigen Aufnahme bzw. Befestigung vorgesehen, beispielsweise durch Verschweißen, Verkleben, Befestigung mittels eines Gewindes, einer Schraube, einer Mutter, eines Splintes, durch Verquetschen oder durch Eintreiben des Bolzens in ein Bolzenloch mit einem geringeren Durchmesser. Gemäß einer bevorzugten Ausführungsform der Erfindung ist das Halteelement als Aufnahmebuchse mit einem Bolzenloch ausgebildet, durch das der Bolzen geschoben werden kann.

Dabei kann der Bolzen aus einem beliebigen Material gebildet sein, etwa Metall, Kunststoff, Keramik oder einem Verbundmaterial und hat bevorzugt einen Durchmesser zwischen 2 mm und 5 mm, besonders bevorzugt zwischen 3 mm und 4 mm, ganz besonders bevorzugt 3,5 mm.

Das Federelement kann ebenfalls aus einem beliebigen Material, etwa Metall, Keramik, Kunststoff oder einem Verbundwerkstoff gebildet sein. Dabei ist das ein Ende des Federelements direkt oder über ein weiteres Bauelement an dem Grundelement und das andere Ende des Federelements direkt oder über ein weiteres Bauelement an dem Betätigungselement angebracht, wobei die Anbringung des Federelements in beliebiger form-, kraft- und/oder stoffschlüssiger Weise erfolgt, beispielsweise durch Verschrauben, Verschweißen, Verkleben, mittels eines Splints, durch Verquetschen oder durch Umformung des Federendes.

Gemäß einer besonders vorteilhaften Weiterbildung der Erfindung ist die Ausnehmung im Grundelement derart dimensioniert, dass die maximal mögliche Verschwenkung des Betätigungselements um den Bolzen begrenzt ist, insbesondere indem ab einem vordefinierten Verschwenkwinkel eine Oberfläche des Betätigungselements und ein Rand der Ausnehmung in Kontakt kommen.

Gemäß einer vorteilhaften Weiterbildung der Erfindung wird ein Ende des Federelements durch eine Öffnung in dem Grundelement geführt und besonders bevorzugt dort fixiert, beispielsweise durch Umbiegen des Federendes. Ebenfalls bevorzugt entspricht die Form und Größe der Öffnung im Wesentlichen der Querschnittsfläche des Federendes, wobei die Öffnung besonders bevorzugt eine kreisrunde Form aufweist.

Das andere Ende des Federelements ist gemäß einer vorteilhaften Weiterbildung der Erfindung gegen ein Abstützelement des Betätigungselements abgestützt, wobei das Abstützelement besonders bevorzugt als ein von dem Betätigungselement abstehender Steg ausgebildet ist.

Gemäß einer vorteilhaften Weiterbildung der Erfindung steht der Steg an dem Betätigungselement, an dem ein Ende des Federelements an gelenkt oder befestigt ist, aus der Fläche des Betätigungselements heraus oder von dieser ab, wobei es besonders bevorzugt seitlich in einer Richtung parallel zur Hauptachse des Bolzens von diesem absteht und ganz besonders bevorzugt eine Einkerbung aufweist mit der das Ende des Federelements gehalten wird.

Gemäß einer weiteren vorteilhaften Weiterbildung der Erfindung ist die Haltevorrichtung für den Bolzen an dem Grundelement als Lagerlasche ausgeformt, die einteilig mit dem Grundelement oder als daran angebrachtes Bauelement gebildet ist, bevorzugt aber daraus mittels Umformung einstückig ausgeformt ist. Ebenfalls bevorzugt ist der Bolzen durch wenigstens zwei voneinander beabstandete Lagerlaschen am Grundelement angeordnet.

Grundsätzlich kann die Lagerlasche dabei aus einem beliebigen Material, etwa Metall, Kunststoff oder einem Verbundwerkstoff gebildet sein, bevorzugt ist sie aus dem gleichen Material wie das Grundelement geformt und ganz besonders bevorzugt einstückig mit dem Grundelement ausgebildet.

Gemäß einer weiteren vorteilhaften Weiterbildung der Erfindung sind die Lagerlaschen unmittelbar am Rand der Ausnehmung aus dem Grundelement einstückig geformt, wobei bevorzugt durch Umformung des Grundelements zur Herstellung der Lagerlaschen die Ausnehmung gebildet wird.

Die Lagerlasche besitzt eine Aufnahmeöffnung mit einem Durchmesser, der größer oder gleich dem Durchmesser des Bolzens ist. Ganz besonders bevorzugt entspricht die Form der Aufnahmeöffnung einer Querschnittsfläche des Bolzens orthogonal zu dessen Hauptachse.

Gemäß einer bevorzugten Ausgestaltung der Erfindung ist die Aufnahmebuchse zur Anbringung des Bolzens an dem Betätigungselement mit diesem einstückig ausgebildet. Es ist allerdings auch denkbar, dass die Aufnahmebuchse an einem an dem Betätigungselement angebrachten, separaten Bauelement angeordnet ist. Dabei ist der Durchmesser des Bolzenlochs wenigstens genauso groß wie der Durchmesser des Bolzens.

Gemäß einer besonders bevorzugten Weiterbildung der Erfindung ist der Durchmesser des Bolzenloches allerdings geringfügig größer als der Durchmesser des Bolzens, so dass der Bolzen in dem Bolzenloch frei gedreht werden kann, wobei ganz besonders bevorzugt eine Lagerung des Bolzens vorgesehen ist. Darüber hinaus ist eine Weiterentwicklung der Erfindung denkbar, die ein separates Lagerbauteil zwischen Bolzenloch und Bolzen, etwa einem Kugel-, Wälz- oder Gleitlager, aufweist.
Gemäß einer bevorzugten Ausgestaltung der Erfindung ist die Aufnahmebuchse des Betätigungselements mit dem Bolzenloch zwischen den zwei Lagerlaschen des Grundelements angeordnet.
Gemäß einer vorteilhaften Weiterbildung der Erfindung ist der Bolzen aus Metall gebildet und weist bevorzugt wenigstens in den Bereichen, die durch die Aufnahmeöffnung der Lagerlasche und/oder durch das Bolzenloch des Betätigungselements geführt sind, eine glatte Oberflächenstruktur auf. Besonders bevorzugt ist der Bolzen oberflächenbeschichtet, beispielsweise mit einem Lack, einer Polymerschicht, einer Oxidschicht oder einer Metallschicht, die eine vom Bolzen abweichende chemische Zusammensatzung aufweist.
Nach einer bevorzugten Ausgestaltung der Erfindung ist der Bolzen im Wesentlichen parallel zu der Oberfläche des Grundelements angeordnet, so dass die um den Bolzen ausführbare Schwenkbewegung des Betätigungselements im Wesentlichen orthogonal zur Oberfläche des Grundelements erfolgen kann. Erfindungsgemäss weist der Bolzen einen Flansch auf, wobei sich besonders bevorzugt der Bolzen zu beiden Seiten des Flansches erstreckt. Ganz besonders bevorzugt wird der Bolzen derart angeordnet, dass der Flansch zu einer Seite an einem Teil des Grundkörpers oder an einem Teil des Betätigungselements, bevorzugt an dem Halteelement für den Bolzen oder an einer Fläche der Lagerlasche anliegt, wobei der Kontakt ganz besonders bevorzugt vollflächig erfolgt. Darüber hinaus steht die andere Seite des Flansches in Kontakt mit dem Federelement, wodurch der Bolzen in beide Richtungen entlang seiner Hauptachse in besonders einfacher Weise gegen Verrutschen effizient gesichert ist.
Der Flansch kann gemäß dieser Weiterbildung der Erfindung grundsätzlich beliebig geformt sein, bevorzugt weist der Flansch aber beidseitig ebene Seitenflächen auf, die besonders bevorzugt orthogonal zur Hauptachse des Bolzens angeordnet sind. Dabei kann der Flansch einteilig mit Bolzen geformt oder als separates Bauelement an diesem in beliebiger Weise form-, kraft- und/oder stoffschlüssig angebracht sein.

Gemäß einer weiteren vorteilhaften Weiterbildung der Erfindung ist das Federelement eine Schenkelfeder, die bevorzugt koaxial zum Bolzen angeordnet ist, besonders bevorzugt im Bereich eines der Enden des Bolzens und dabei ganz besonders bevorzugt einseitig in Kontakt mit dem Flansch des Bolzens steht. Dabei steht die Feder bevorzugt in jedem Betätigungszustand des Betätigungselements unter Spannung.

Gemäß einer vorteilhaften Ausgestaltung der Erfindung ist das Federelement eine symmetrische Schenkelfeder, wodurch die Montage erleichtert wird und ein vollautomatischer Einbau aufgrund der Richtungsunabhängigkeit der Einbaurichtung des Federelements in besonders einfacher Weise möglich ist.

Gemäß einer vorteilhaften Ausgestaltung der Erfindung sind die beiden Federenden als gerader oder gebogener Schenkel ausgebildet. Grundsätzlich können diese aber auch beliebig anders ausgeformt sein, beispielsweise als Ösen, abgeflachte Flächen, abgeknickte Schenkel und/oder ein beliebiges Befestigungsmittel aufweisen.

Ein Ausfiihrungsbeispiel der Erfindung wird nachfolgend mit Bezug auf die Zeichnungen näher erläutert. In den Figuren zeigen:
- Fig. 1: eine perspektivische Absicht einer Ausführungsform einer Betätigungseinheit für einen Fahrzeugsitz;
- Fig. 2: eine perspektivische, vergrößerte Teilansicht der in Fig. 1 dargestellten Ausführungsform
- Fig. 3: eine perspektivische Ansicht der in Fig. 1 dargestellten Ausführungsform entlang der Verlaufsrichtung eines Grundelements;
- Fig. 4: eine gegenüber der Ansicht in Fig. 3 um 90° in der Horizontalen gedrehte, perspektivische Ansicht einer Ausführungsform und

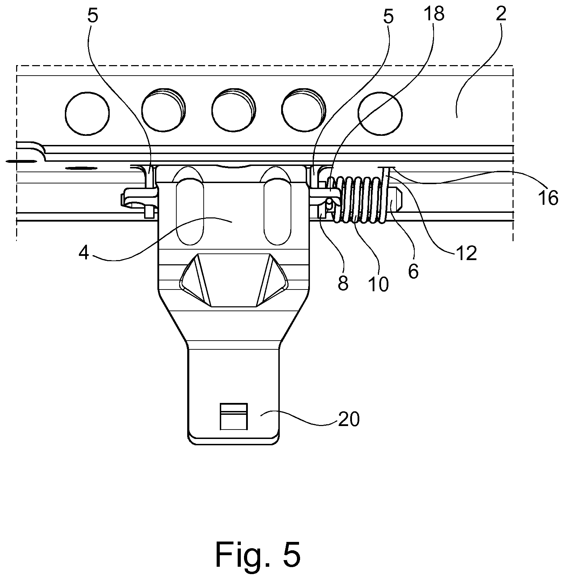

- Fig. 5: eine gegenüber der Ansicht in Fig. 4 um 90° in der Vertikalen gedrehte, perspektivische Ansicht der in Fig. 4 dargestellten Ausfiihrungsform der Betätigungseinheit.

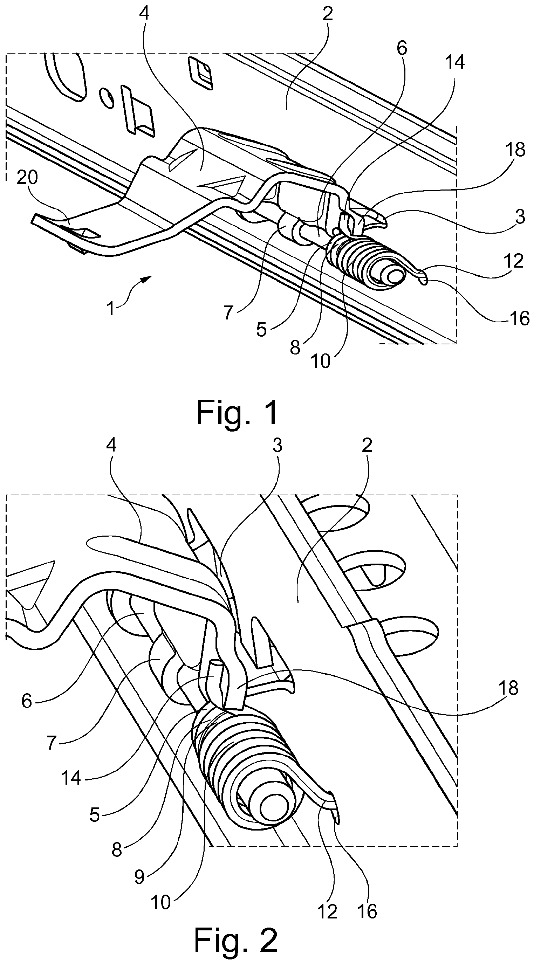

Eine in Fig. 1 dargestellte Ausführungsform einer Betätigungseinheit 1 für einen Fahrzeugsitz, insbesondere zur Betätigung einer Verriegelungseinheit an einer Sitzschiene 2 an einem Kraftfahrzeugsitz weist einen Betätigungshebel 4 auf, der mittels eines auf einer Seite einer Sitzschiene 2 angebrachten Lagerbolzens 6 verschwenkbar angeordnet ist.

Bei der Sitzschiene 2 handelt es sich um eine obere, mit einem Fahrzeugsitz fest verbundene Sitzschiene 2 eines Sitzschienenpaars in einem Kraftfahrzeug, die im Wesentlichen aus Metall gefertigt ist und im Bereich der Betätigungseinheit 1 eine Ausnehmung 3 aufweist, durch die der Betätigungshebel 4 durch die Sitzschiene 2 geführt ist.

Der metallische Betätigungshebel 4 ist durch die Ausnehmung 3 in der Sitzschiene 2 geführt und besitzt eine mehrfach abgewinkelte Form, wie es in den Figuren 1, 2 und 3 besonders gut zu erkennen ist. Dabei weist der Betätigungshebel 4 auf der dem Lagerbolzen 6 gegenüberliegenden Seite der Sitzschiene 2 einen Wirkungsbereich 22 auf, der mit einem Verriegelungsmechanismus des Sitzschienenpaares (in den Figuren nicht dargestellt) zusammenwirken kann.

Der metallische Lagerbolzen 6 ist durch kreisrunde, gestanzte Öffnungen in zwei an der Sitzschiene 2 einstückig angeformten Lagerlaschen 5 sowie durch ein durch den Betätigungshebel 4 erzeugtes Bolzenloch 7 geführt, wodurch die Hauptachse des Lagerbolzens 6 nahezu parallel zu einer vorgesehenen Bewegungsrichtung der Sitzschiene 2 verläuft und ein Verschwenken des Betätigungshebels 4 um die Hauptachse des Lagerbolzens 6 in Bezug zu der Sitzschiene 2 erlaubt. Dabei weist der Lagerbolzen 6 einen Durchmesser von 3,5 mm auf.

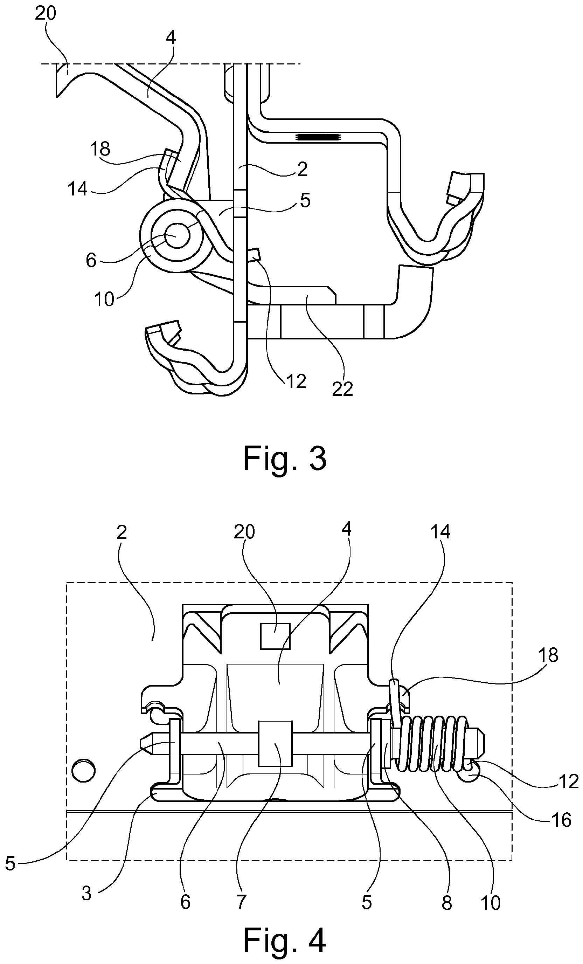

Im Bereich eines der Enden des Lagerbolzens 6 ist eine metallische Schenkelfeder 10 mit mehreren Windungen um den Lagerbolzen 6 koaxial angeordnet. Der eine Schenkel 12 der Schenkelfeder 10 ist durch eine Öffnung 16 in der Sitzschiene 2 geführt und dort leicht abgebogen, wie es in Fig. 3 besonders gut zu erkennen ist. Der andere Schenkel 14 der Schenkelfeder 10 ist gegen einen Haltesteg 18, der seitlich an dem Betätigungshebel 4 angeformt ist, abgestützt, wodurch die Schenkelfeder 10 den Betätigungshebel 4 durchgehend, bezüglich der Verschwenkungum den Lagerbolzen 6 unter Spannung hält.

Der Lagerbolzen 6 weist einen Anlageflansch 8 auf, der beabstandet von beiden Enden des Lagerbolzens 6 an diesem angeformt ist und zwei zur Hauptachse des Lagerbolzens 6 orthogonale Anlageflächen 9 aufweist.

Bei der Montage der Betätigungseinheit für einen Fahrzeugsitz 1 wird der Lagerbolzen 6 soweit durch die Lagerlaschen 5 sowie durch das Bolzenloch 7 des Betätigungshebels 4 geführt, bis der Anlageflansch 8 vollflächig mit einer der beiden Anlageflächen 9 an der Lagerlaschen 5 anliegt.

Auf der anderen Seite des Anlageflansches 8 ist der Lagerbolzen 6 von der an der Sitzschiene 2 und an dem Betätigungshebel 4 fest angebundenen Schenkelfeder 10 umgeben, wobei die Schenkelfeder 10 direkt an der anderen Anlagefläche 9 des Anlageflansches 8 anliegt und diesen gegen ein Herausrutschen aus den Lagerlaschen 5 sowie aus dem Bolzenloch 7 des Betätigungshebels 4 entgegen der Montagerichtung sichert.

### Bezugszeichenliste

- 1: Betätigungseinheit für einen Fahrzeugsitz
- 2: Grundelement
- 3: Ausnehmung
- 4: Betätigungselement
- 5: Lagerlasche
- 6: Bolzen
- 7: Aufnahmebuchse mit einem Bolzenloch
- 8: Flansch
- 9: Anlagefläche
- 10: Federelement
- 12: Federende
- 14: Federende
- 16: Öffnung
- 18: Steg
- 20: Betätigungsbereich
- 22: Wirkungsbereich

## Patentansprüche

1. Betätigungseinheit für einen Fahrzeugsitz (1), insbesondere zur Betätigung einer Verriegelungsvorrichtung einer Sitzschiene eines Kraftfahrzeugsitzes, mit
- einem über einen Bolzen (6) an einem Grundelement (2) angelenkten Betätigungselement (4) und
- einem an dem Bolzen (6) angeordneten, das Betätigungselement (4) vorspannenden Federelement (10), wobei
- das Federelement (10) und der Bolzen (6) derart ausgebildet sind, dass das Federelement (10) den Bolzen (6) in seiner montierten Lage sichert, **dadurch gekennzeichnet, dass**
- der Bolzen (6) einen Flansch (8) aufweist und
- der Bolzen (6) derart angeordnet ist, dass der Flansch (8) zu einer Seite an einem Teil des Grundelements (2) oder an einem Teil des Betätigungselements (4) anliegt und sich die andere Seite des Flansches (8) in Kontakt mit dem Federelement (10) befindet.

2. Betätigungseinheit nach Anspruch 1, **dadurch gekennzeichnet, dass** das Grundelement (2) wenigstens eine Haltevorrichtung für den Bolzen (6) aufweist, wobei die Haltevorrichtung bevorzugt als Lagerlasche (5) ausgeformt ist, die besonders bevorzugt einstückig mit dem Grundelement (2) ausgebildet ist.

3. Betätigungseinheit nach Anspruch 1 oder 2, **dadurch gekennzeichnet, dass** die Lagerlasche (5) eine Aufnahmeöffnung zur Aufnahme des Bolzens (6) aufweist, wobei die Form der Aufnahmeöffnung bevorzugt einer Querschnittsfläche des Bolzens (6) orthogonal zu dessen Hauptachse entspricht.

4. Betätigungseinheit nach einem oder mehreren der vorhergehenden Ansprüche, **dadurch gekennzeichnet, dass** das Betätigungselement (4) wenigstens ein Haltelement für den Bolzen aufweist, das bevorzugt als Aufnahmebuchse (7) mit Bolzenloch ausgebildet ist, wobei besonders bevorzugt die Aufnahmebuchse (7) mit dem Bolzenloch zwischen zwei Lagerlaschen (5) des Grundelements (2) angeordnet ist.

5. Betätigungseinheit nach einem oder mehreren der vorhergehenden Ansprüche, **dadurch gekennzeichnet, dass** ein Ende (12) des Federelements (10) durch eine Öffnung (16) in dem Grundelement (2) geführt und besonders bevorzugt dort fixiert ist und/oder ein anderes Ende (14) des Federelements (10) gegen ein Halteelement des Betätigungselements (4) abgestützt ist, wobei das Halteelement besonders bevorzugt als ein von dem Betätigungselement abstehender Steg (18) ausgebildet ist.

6. Betätigungseinheit nach Anspruch 5, **dadurch gekennzeichnet, dass** der Steg (18) an dem Betätigungselement (4) aus der Fläche des Betätigungselements (4) heraus- oder von dieser absteht, wobei der Steg (18) bevorzugt seitlich in einer Richtung parallel zur Hauptachse des Bolzens (6) von diesem absteht und besonders bevorzugt eine Einkerbung aufweist mit der das Ende (14) des Federelements (10) gehalten wird.

7. Betätigungseinheit nach einem oder mehreren der vorhergehenden Ansprüche, **dadurch gekennzeichnet, dass** das Grundelement (2) eine Ausnehmung (3) aufweist, durch die das Betätigungselement (4) hindurch geschoben anordnen ist, wobei bevorzugt die Ausnehmung (3) derart dimensioniert ist, dass sie die maximal mögliche Verschwenkung des Betätigungselements (4) um den Bolzen (6) begrenzt.

8. Betätigungseinheit nach einem oder mehreren der vorhergehenden Ansprüche, **dadurch gekennzeichnet, dass** der Bolzen (6) im Wesentlichen parallel zu der Oberfläche des Grundelements (2) angeordnet ist, wobei sich besonders bevorzugt der Bolzen (6) zu beiden Seiten des Flansches (8) erstreckt.

9. Betätigungseinheit nach einem oder mehreren der vorhergehenden Ansprüche, **dadurch gekennzeichnet, dass** der Bolzen (6) derart angeordnet ist, dass der Flansch (8) zu einer Seite an dem Halteelement (7) für den Bolzen oder an einer Fläche der Lagerlasche (5) anliegt.

10. Betätigungseinheit nach einem oder mehreren der vorhergehenden Ansprüche, **dadurch gekennzeichnet, dass** das Federelement (10) eine Schenkelfeder ist, wobei bevorzugt die beiden Federenden (12, 14) als gerader oder gebogener Schenkel ausgebildet sind und besonders bevorzugt die Schenkelfeder koaxial im Bereich eines der Enden des Bolzens (6) angeordnet ist und dabei ganz besonders bevorzugt in jedem Betätigungszustand des Betätigungselements (4) unter Spannung steht.

## Claims

1. Actuating unit for a vehicle seat (1), in particular for actuating a locking device of a seat rail of a motor vehicle seat, comprising
- an actuating element (4) articulated via a pin (6) on a base element (2) and
- a spring element (10) arranged on the pin (6) and pretensioning the actuating element (4), wherein
- the spring element (10) and the pin (6) are configured such that the spring element (10) secures the pin (6) in the assembled position thereof,
**characterized in that**
- the pin (6) has a flange (8) and
- the pin (6) is arranged such that the flange (8) at one side bears against a part of the base element (2) or against a part of the actuating element (4) and the other side of the flange (8) is in contact with the spring element (10).

2. Actuating unit according to Claim 1, **characterized in that** the base element (2) has at least one retaining device for the pin (6), wherein the retaining device is preferably shaped as a bearing bracket (5) which particularly preferably is configured integrally with the base element (2).

3. Actuating unit according to Claim 1 or 2, **characterized in that** the bearing bracket (5) has a receiver opening for receiving the pin (6), wherein the shape of the receiver opening preferably corresponds to a cross-sectional surface of the pin (6) at right angles to the main axis thereof.

4. Actuating unit according to one or more of the preceding claims, **characterized in that** the actuating element (4) has at least one retaining element for the pin, which is preferably configured as a receiver bushing (7) with a pin hole, wherein particularly preferably the receiver bushing (7) is arranged with the pin hole between two bearing brackets (5) of the base element (2).

5. Actuating unit according to one or more of the preceding claims, **characterized in that** one end (12) of the spring element (10) is guided through an opening (16) in the base element (2) and is particularly preferably fixed there and/or a further end (14) of the spring element (10) is supported against a retaining element of the actuating element (4), wherein the retaining element is particularly preferably configured as a projection (18) protruding from the actuating element.

6. Actuating unit according to Claim 5, **characterized in that** the projection (18) on the actuating element (4) protrudes out of the surface of the actuating element (4) or protrudes therefrom, wherein the projection (18) preferably protrudes therefrom to the side in a direction parallel to the main axis of the pin (6) and particularly preferably has a notch by which the end (14) of the spring element (10) is retained.

7. Actuating unit according to one or more of the preceding claims, **characterized in that** the base element (2) has a recess (3) through which the actuating element (4) is pushed, wherein preferably the recess (3) is dimensioned such that it limits the maximum possible pivoting of the actuating element (4) about the pin (6).

8. Actuating unit according to one or more of the preceding claims, **characterized in that** the pin (6) is arranged substantially parallel to the surface of the base element (2), wherein particularly preferably the pin (6) extends on both sides of the flange (8).

9. Actuating unit according to one or more of the preceding claims, **characterized in that** the pin (6) is arranged such that the flange (8) at one side bears against the retaining element (7) for the pin or against a surface of the bearing bracket (5).

10. Actuating unit according to one or more of the preceding claims, **characterized in that** the spring element (10) is a leg spring, wherein preferably the two spring ends (12, 14) are configured as straight or bent legs and particularly preferably the leg spring is arranged coaxially in the region of one of the ends of the pin (6) and in this case is quite particularly preferably under tension in every actuating state of the actuating element (4) .

## Revendications

1. Unité d'actionnement pour un siège de véhicule (1), en particulier pour l'actionnement d'un dispositif de verrouillage d'un rail de siège d'un siège de véhicule automobile, comprenant
- un élément d'actionnement (4) articulé à un élément de base (2) par le biais d'un boulon (6) et
- un élément de ressort (10) disposé sur le boulon (6), sollicitant l'élément d'actionnement (4),
- l'élément de ressort (10) et le boulon (6) étant réalisés de telle sorte que l'élément de ressort (10) fixe le boulon (6) dans sa position montée,
**caractérisée en ce que**
- le boulon (6) présente une bride (8) et
- le boulon (6) est disposé de telle sorte que la bride (8) s'applique d'un côté contre une partie de l'élément de base (2) ou contre une partie de l'élément d'actionnement (4) et que l'autre côté de la bride (8) soit en contact avec l'élément de ressort (10).

2. Unité d'actionnement selon la revendication 1, **caractérisée en ce que** l'élément de base (2) présente au moins un dispositif de retenue pour le boulon (6), le dispositif de retenue étant réalisé de préférence sous forme de patte de support (5) qui est réalisée particulièrement préférablement d'une seule pièce avec l'élément de base (2).

3. Unité d'actionnement selon la revendication 1 ou 2, **caractérisée en ce que** la patte de support (5) présente une ouverture de réception pour recevoir le boulon (6), la forme de l'ouverture de réception correspondant de préférence à une surface en section transversale du boulon (6) perpendiculairement à son axe principal.

4. Unité d'actionnement selon l'une quelconque ou plusieurs des revendications précédentes, **caractérisée en ce que** l'élément d'actionnement (4) présente au moins un élément de retenue pour le boulon, qui est réalisé de préférence sous forme de douille de réception (7) avec un trou de boulon, la douille de réception (7) étant particulièrement préférablement disposée avec le trou de boulon entre deux pattes de support (5) de l'élément de base (2).

5. Unité d'actionnement selon l'une quelconque ou plusieurs des revendications précédentes, **caractérisée en ce qu'**une extrémité (12) de l'élément de ressort (10) est guidée à travers une ouverture (16) dans l'élément de base (2) et particulièrement préférablement y est fixée et/ou une autre extrémité (14) de l'élément de ressort (10) est supportée contre un élément de retenue de l'élément d'actionnement (4), l'élément de retenue étant réalisé de manière particulièrement préférée sous forme de nervure (18) faisant saillie depuis l'élément d'actionnement.

6. Unité d'actionnement selon la revendication 5, **caractérisée en ce que** la nervure (18) au niveau de l'élément d'actionnement (4) fait saillie hors ou depuis celui-ci à partir de la surface de l'élément d'actionnement (4), la nervure (18) faisant de préférence saillie latéralement dans une direction parallèle à l'axe principal du boulon (6) depuis celui-ci et présentant de manière particulièrement préférée une entaille avec laquelle l'extrémité (14) de l'élément de ressort (10) est retenue.

7. Unité d'actionnement selon l'une quelconque ou plusieurs des revendications précédentes, **caractérisée en ce que** l'élément de base (2) présente un évidement (3) à travers lequel l'élément d'actionnement (4) doit être poussé, l'évidement (3) étant de préférence dimensionné de telle sorte qu'il limite le pivotement maximal possible de l'élément d'actionnement (4) autour du boulon (6).

8. Unité d'actionnement selon l'une quelconque ou plusieurs des revendications précédentes, **caractérisée en ce que** le boulon (6) est disposé essentiellement parallèlement à la surface de l'élément de base (2), le boulon (6) s'étendant particulièrement préférablement des deux côtés de la bride (8).

9. Unité d'actionnement selon l'une quelconque ou plusieurs des revendications précédentes, **caractérisée en ce que** le boulon (6) est disposé de telle sorte que la bride (8) s'applique d'un côté contre l'élément de retenue (7) pour le boulon ou contre une surface de la patte de support (5).

10. Unité d'actionnement selon l'une quelconque ou plusieurs des revendications précédentes, **caractérisée en ce que** l'élément de ressort (10) est un ressort à branches, les deux extrémités du ressort (12, 14) étant de préférence réalisées sous forme de branches droites ou courbes et particulièrement préférablement, le ressort à branches étant disposé coaxialement dans la région de l'une des extrémités du boulon (6) et en l'occurrence de manière particulièrement préférée étant sous contrainte dans chaque état d'actionnement de l'élément d'actionnement (4).
